Europäisches Patentamt

(19) European Patent Office

Office européen des brevets

(11) Publication number: **0 059 859**
**A2**

(12) **EUROPEAN PATENT APPLICATION**

(21) Application number: **82101188.9**

(22) Date of filing: **17.02.82**

(51) Int. Cl.³: **B 60 J 7/10**

(30) Priority: **05.03.81 US 240744**

(43) Date of publication of application:
**15.09.82 Bulletin 82/37**

(84) Designated Contracting States:
**AT BE CH DE FR GB IT LI NL SE**

(71) Applicant: **Prestigue Aluminum Products, Inc.**
**10639 Ramona Avenue**
**Montclair California 91763(US)**

(72) Inventor: **Eschbach, Robert Cyril**
**510 Kings Road**
**Newport Beach California 92663(US)**

(74) Representative: **Wagner, Karl H.**
**P.O. Box 246 Gewürzmühlstrasse 5**
**D-8000 Munich 22(DE)**

(54) Motor vehicle roof vent and security latch therefor.

(57) A roof vent (10) for a motor vehicle is disclosed comprising a vent closure panel (12) and a security latching assembly (20) for removably connecting the closure panel to a supporting framework structure (14) that is mounted at an opening (36) established in the roof of the vehicle. The present latching assembly (20) includes an arrangement (100, 120 and 130) which eliminates the use of a pull pin that has been common to many vent latches of the prior art, so that the closure panel can be easily unlatched only at a location within the interior of the vehicle. Accordingly, the security of the vehicle and its contents may be better preserved. More particularly, the latching assembly (20) includes a sliding disconnect (126) which is not easily operated by a child of tender years. Hence, unauthorized removal of the closure panel (12) by one who is either outside or inside the vehicle can be better prevented. The supporting framework structure (14) is fabricated to include particularly dimensioned slots (88) for receiving therein hinge member (22) that are attached to the vent closure panel (12), so as to permit a closure panel to be easily and reliably reconnected to its framework structure.

1

# MOTOR VEHICLE ROOF VENT AND SECURITY LATCH THEREFOR

## TECHNICAL FIELD

This invention relates to a vent for a motor vehicle and to an associated security latch assembly for removable attaching a closure panel of said vent to a supporting framework structure at an opening established within the roof of the vehicle, whereby to prevent unauthorized removal of the closure panel from its framework structure. The present vent can be characterized by an attractive appearance, a relatively long life expectancy, and the capability of efficiently ventilating the interior of the vehicle.

2

## BACKGROUND ART

Many motor vehicles are being manufactured with a sun roof or vent as an increasingly popular option. Generally. the sun roof or vent has taken one of two respective constructions. A typical sun roof construction comprises a rigid glass or plastic. closure panel that is mounted within an opening established in the roof of the vehicle. The panel is slideable from a closed to an opened position in a direction which is essentially parallel to the vehicle roof line, whereby to expose the occupants of the vehicle to the sun through the opening. A typical vent construction includes a rigid glass or plastic vent closure panel that is also mounted in an opening established in the roof of the vehicle. The vent panel is adapted for pivotable movement upwardly from the roof from a closed to an opened position, whereby to vent the interior of the vehicle to the atmosphere through the opening.

However. there are several shortcomings inherent in the construction and installation of the conventional motor vehicle roof vent. By way of example, many motor vehicle vent closure panels may be removed from the roof of the vehicle by withdrawing a pull pin from a latching assembly to thereby disconnect the closure panel from a supporting framework structure in which said panel is received. In the event that the closure panel is pivoted to an opened position, the pull pin may be withdrawn from either the exterior or interior of the vehicle. Hence, as a consequence of the latching assemblies of the prior art, unauthorized persons could gain access to the interior of the vehicle by first withdrawing the pull pin while outside the vehicle and then removing the vent panel from the supporting framework in the vehicle roof. Accordingly, such a latching assembly having a pull pin interconnection arrangement can lead to a breach in the security of the vehicle and its contents.

Moreover, a child could, without permission, withdraw the pull pin from the latching assembly while inside the vehicle. Should the vehicle be in motion, the vent panel could be blown off or dislodged from the vehicle roof, whereby to face destruction upon impact with the ground. What is more, the vent panel might strike a parked or moving vehicle. Accordingly, such a latching and pull pin assembly may also provide a safety hazzard to surrounding persons and property.

4

Another problem resides in the fabrication of the supporting framework structure which is installed in the opening established in the vehicle roof for receiving the vent closure panel therein. In the past, the framework for the closure panel has been typically stretch formed from extrusions of aluminum, or the like. Unfortunately, the framework cannot always be reproduced with a high degree of consistency. As a result of the lack of uniformity during manufacture, not all framework would make the same fit in openings established in the roofs of different motor vehicles. Consequently, the framework may not form an adequate seal around the opening established in the roofs of different vehicles. Thus, it is possible that water might leak past the edges of the framework and into the interior of the vehicle causing either vehicle damage or user discomfort.

5

Another common disadvantage which is characteristic of conventional vent closure panel construction is the occurrence of air turbulence within the passenger compartment of the vehicle when the closure panel is either moved to an opened position or disconnected and removed from its framework. More particularly, the conventional roof vent is not structured to suitably baffle the wind from the occupants of the vehicle when the vehicle is traveling at relatively high speeds. Accordingly, the occupants of the vehicle are undesirably subjected to a loud, whistling or air hammering sound as air rushes over the raised rearward edge of the vent closure panel.

What is more, the conventional vent closure panel typically has associated therewith a pair of latching assemblies (such as that described in the paragraphs above) for removably connecting the rearward edge of the vent closure panel to the framework structure. Generally, one of the aforementioned latching assemblies is positioned above the head of the vehicle operator, while the second of the pair of latching assemblies is positioned above the head of a passenger riding in the front seat  The location of the latching assemblies could pose a safety problem in the event that the motor vehicle is either subjected to large bumps in the road or is rolled over on its roof during an accident. In either of these last-mentioned cases, the head of the driver and passenger could undesirably strike either one or both of the overhead latching assemblies. Consequently, the combination of the prior art latching assemblies with the conventional vent closure panel may provide a potentially unsafe condition for any occupant of a motor vehicle who is seated underneath one of said latching assemblies.

What is even more. the forward edge of the conventional vent panel is typically provided with a hinge or brackt assembly to permit the closure panel to be removably connected to the framework structure and pivoted thereat for movement into an opened or ventilating position. However, in the event that a disconnected closure panel is to be reconnected to its framework structure, the bracket assembly must first be aligned with a suitable recepticle means which is usually cut from the framework structure. It has been found that many of the prior art hinge assemblies which are combined with conventional vent closure panels are
difficult to properly align relative to the recepticles
in the framework. Hence, reconnection of the closure
panel to the framework structure has proven to be both
a time consuming and burdensome task. Moreover, it has
also been found that the interface between the hinge
assembly and the recepticle in the framework structure
is not generally capable of supplying a reliable
weather seal. Accordingly, leakage may occur at the
hinge interface which could become an undesirable
source of inconvenience and irritation of the vehicle
occupants.

By way of example, one well-known and commercially
available vent structure that is adapted for
installation in the roof of a motor vehicle is
described in United States Patent No. 3,974,753 issued
August 17, 1976.

8

## SUMMARY OF THE INVENTION

Briefly, and in general terms, a roof vent for a motor vehicle is disclosed comprising a transparent vent closure panel and a security latching assembly mounted at approximately the center of the rearward end of the closure panel for removably connecting said panel to a molded plastic supporting framework structure. The framework structure is particularly fabricated for installation at an opening established within the roof of the vehicle, whereby to minimize air turbulence that might occur at the passenger compartment of the vehicle. The latching assembly permits the vent closure panel to be either locked in a closed position or secured in an opened or ventilating position. The latching assembly includes a pivotable lock handle connected to the rearward end of the closure panel, a link connected between the lock handle and the framework structure, and a spring-biased slide which cooperates with the link to adapt the link to be removably attached to the framework structure. The forward end of the vent closure panel is provided with a pair of hinges mounted therealong, so that the closure panel can be pivoted upwardly and either moved
into the ventilating position or raised for removal
from the opening established in the vehicle roof.
Uniquely structured slots are molded into the
supporting framework to receive respective hinges
therein for removably connecting the forward end of the
closure panel to the framework structure. Each
receiving slot includes a cammed interior surface,
whereby to insure a proper alignment of the hinges
therewithin and to minimize possible damage to the
framework structure in the event that the hinges are
improperly aligned with the slots when reconnecting the
closure panel to the framework.

10

## ADVANTAGEOUS EFFECTS OF THE INVENTION

Briefly, and in general terms, it is a primary object of the present invention to provide an improved motor vehicle roof vent which overcomes the problems common to prior art roof vents.

It is another object of the present invention to provide a unique latching assembly whereby to removably connect the vent closure panel to its supporting framework structure.

It is still another object of the present invention to provide a supporting framework structure for a vent closure panel that is manufactured according to a technique by which a relatively high degree of uniformity can be maintained among similarly manufactured framework structures. Therefore. the supporting framework can be effectively installed in the roof of any suitable vehicle, so that closure panels would be interchangeable with one another in the event that either repair or replacement thereof becomes necessary.

It is yet another object of the present invention to provide a supporting framework structure for a vent closure panel that is fabricated so as to form a tight seal against the elements when installed within an opening established in the vehicle roof.

It is yet another object of the present invention to provide a supporting framework structure for a vent closure panel that is fabricated so as to suitably baffle the wind, whereby to minimize the occurrence of air turbulence within the passenger compartment of the vehicle when the vehicle is traveling at a relatively high rate of speed and the vent closure panel is either raised to an opened position or disconnected and removed from its supporting framework.

12

It is still another object of the present invention to provide a supporting framework structure for a vent closure panel that is fabricated to include particularly dimensioned slots, which slots are adapted to receive therein respective hinge members that are attached to the vent closure panel. Accordingly, a closure panel can be easily and quickly reconnected to its framework structure without experiencing the difficulties commonly encountered with many conventional vent hinges.

## BRIEF DESCRIPTION OF THE DRAWINGS

FIG. 1 illustrates the roof vent of the present invention installed at the roof of an automobile;

FIG. 2 illustrates the closure panel of the present roof vent in the opened or ventilating position;

FIG. 3 is a plan view of the closure panel and the supporting framework structure thereof;

FIG. 4 is a front view of a portion of the supporting framework structure of the closure panel;

FIG. 5 is a cross-section taken along the lines 5-5 of FIG. 3 showing the closure panel in the closed or locked position;

FIG. 6 shows the closure panel of FIG. 5 rotated into the opened or ventilating position;

FIG. 7 shows a portion of the supporting framework structure to which the rearward end of the closure panel can be releaseably latched;

FIG. 8 is a cross-section taken along the lines 8-8 of FIG. 7;

FIG. 9 shows a portion of the supporting framework structure to which the forward end of the closure panel can be removably connected;

FIG. 10 is a cross-section taken along lines 10-10 of FIG. 9;

FIG. 11 is a top view of a hinge member by which the forward end of the closure panel can be removably connected to the supporting framework structure;

FIG. 12 is a side view of the hinge member of FIG. 11;

FIGs. 13 and 14 illustrate partial cross-sections of the security latching assembly of the present invention in the latched and unlatched conditions, respectively; and

FIG. 15 shows a bottom view of the instant security latching assembly of FIG. 13 when the vent closure panel is raised to the opened position.

15

## DESCRIPTION OF THE PREFERRED EMBODIMENT

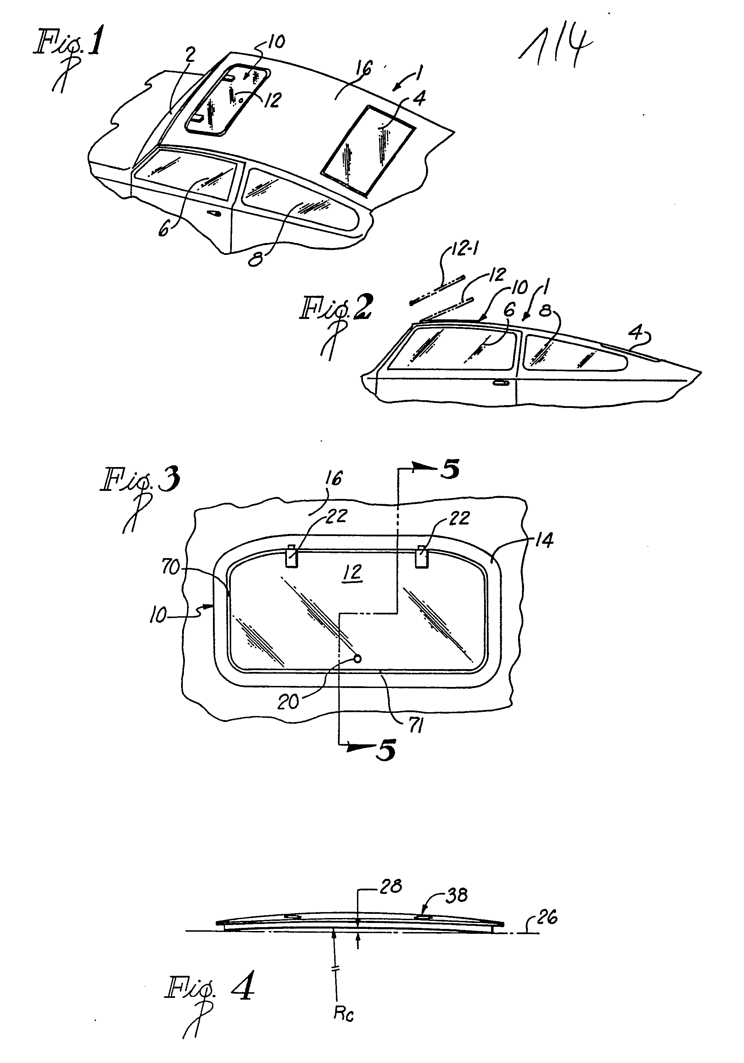

Referring now the drawings, FIGs. 1 2, and 3 show an automobile 1 of conventional construction. The automobile 1 includes a front window 2, a back window 4, side windows 6 and 8, and a roof 16. The roof vent which forms the present invention is generally indicated at roof 16 by reference numeral 10. The roof vent 10 includes a closure panel 12. In a preferred embodiment of the present invention, closure panel 12 is fabricated from a transparent material such as fully tempered automotive safety glass. Transparent closure panel 12 may be coated so as to reduce glare and minimize transmission of ultraviolet rays therethrough. However, it is to be understood that closure panel 12 may also be fabricated from a suitable transparent plastic material, such as polycarbonate or polyacrylate. Moreover, closure panel 12 may also be formed from a suitable opaque or translucent material, such as, for example, fiberglass or plastic, respectively.

In another preferred embodiment of the present invention, the glass from which vent closure panel 12 is fabricated has a shape that is known in the art as a deep compound bend. That is, the glass panel 12 is curved (i.e. dome shaped) along directions corresponding to both the length and width thereof. More particularly. the ratio of the radii of curvatures of the bend along the length to the bend along the width of closure panel 12 is approximately 2:1. Advantages of fabricating closure panel 12 with a deep compound bend include maximizing the strength and rigidity of the glass of closure panel 12 and enhancing the efficiency of a seal that is formed between the closure panel 12 and the automobile roof 16.

The vent closure panel 12 is removably connected to a supporting framework structure 14. Supporting framework structure 14 is adapted to be received in a generally rectangular opening which is established through the roof 16 of automobile 1. The opening for receiving supporting framework structure 14 extends lengthwise over a majority of the width of roof 16. In the assembled relationship, the vent closure panel 12 is situated above the front seat or seats, behind the front window 2 of automobile 1.

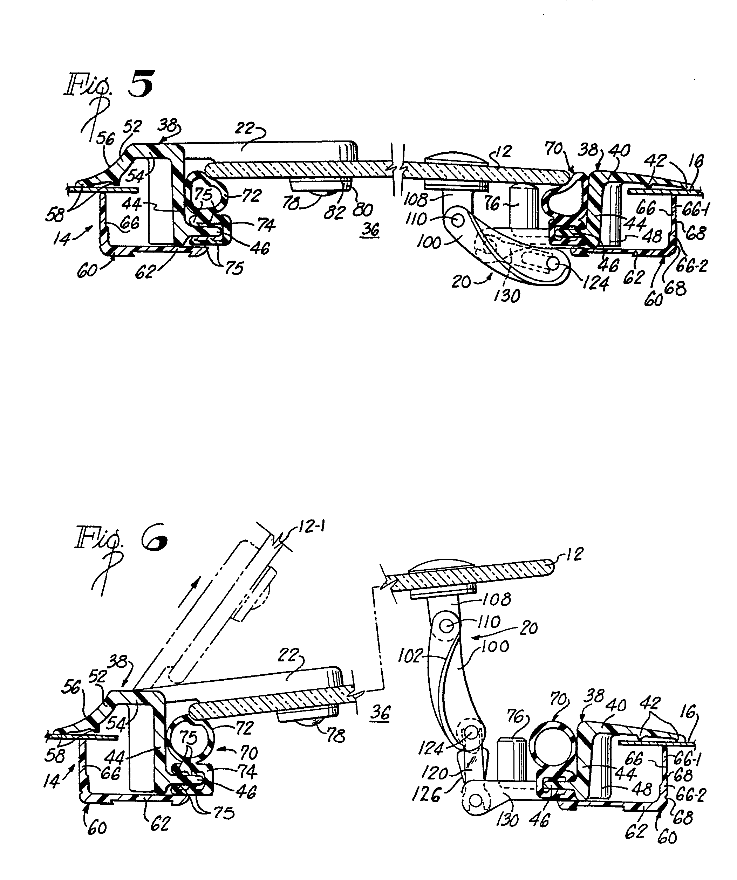

A weather resistant seal 70 extends around the periphery of the opening in the roof 16 of automobile 1 between the vent closure panel 12 and its supporting framework structure 14. Weather seal 70 may be fabricated as a straight length of material that is cut and bent to conform to the dimensions of the roof opening. Opposing ends of weather seal 70 are secured to one another (such as by a suitable adhesive) at a butt joint 71 formed therebetween. The details of weather seal 70 will be better described when referring to FIG. 5.

As will be described in greater detail hereinafter. the rearward end of vent closure panel 12 (i.e. that end closest to rear window 4) has a unique latching assembly 20 attached thereto. The latching assembly 20 permits the closure panel 12 to be either locked in a closed position (as represented in FIG. 1) or secured in a raised or ventilating position (as represented in FIG. 2). Additionally, and as will be more fully described when referring to FIGs. 13 and 14. the components of latching assembly 20 interact among one another. whereby to releaseably connect closure panel 12 to supporting framework structure 14. Hence. closure panel 12 may be disconnected from supporting framework 12 and removed from roof 16 (as represented by reference numeral 12-1 of FIG. 2) in the event that the occupants of the vehicle wish to be exposed to the sun while driving.

The forward end of closure panel 12 (i.e. that end closest to the front window 2) has a pair of generaly flat hinge members 22 attached thereto. As will be more particularly described when referring to FIGs. 11 and 12, the hinge members 22 include portions thereof which are adapted to be pivotably received by corresponding cavities formed in the supporting framework structure 14. Thus, hinge members 22 permit vent closure panel 12 to be rotated out of the opening in the automobile roof 16. whereby panel 12 can be raised to the opened position for providing ventilation to the passenger compartment of the vehicle.

The location at which latching assembly 20 is attached to vent closure panel 12 constitutes an important improvement over conventional motor vehicle roof vents. More particularly. the prior art roof vent construction typically includes a pair of latching assemblies that are attached at the underside of a closure panel immediately above the heads of the

19

vehicle operator and his passenger. Therefore, it is possible that an occupant of the vehicle could strike his head against one of the latching assemblies and thereby incur serious injury should the vehicle become subjected to severe bumping or be overturned during an accident. Hence, the latching assemblies of the prior art roof vents were undesirably positioned in terms of occupant safety. In the present invention, a single latching assembly 20 is positioned overhead, at approximately the mid-point of the rearward edge of closure panel 12. Accordingly, latching assembly 20 is attached to closure panel 12 at a position between the driver and the passenger. Therefore, an occupant of automobile 1 will be unlikely to strike his head against latching assembly 20 in the event that automobile 1 is severely jolted or rolled over.

FIG. 5 of the drawings illustrates the vent roof of the present invention with the vent closure panel 12 locked in the closed position. As was previously disclosed, an opening 36 of rectangular dimension is established in the roof 16 of the automobile in order to accommodate the supporting framework structure 14 of closure panel 12. In a preferred embodiment of the invention, supporting framework structure 14 comprises

20

outside frame member 38 and inside trim ring member 60.
Each of said frame members 38 and 60 has a preformed
shape. More particularly. outside frame member 38 is
fabricated from a molded plastic material such as, for
example. glass reinforced polyester resin. By
fabricating outside frame member 38 by means of molded
construction, a plurality of said structural frame
members may be reproduced with a relatively high degree
of consistency. Accordinly, a vent closure panel 12
may be readily adapted to fit the opening established
in any one of the roofs of a number of different
vehicles, in the event that either repair or
replacement of a closure panel is necessitated.

Outside frame member 38 is of generally rectangular
configuration, so as to extend around the periphery of
the opening 36 established in roof 16. Unlike that
found in roof vents of the prior art. the outside frame
member 38 is provided with a unique contour, so as to
promote a secure fit within the opening 36 of roof 16.
Referring briefly to FIG. 4 of the drawings. a front
view of the outside frame member 38 is shown wih vent
closure panel 12 removed therefrom. As illustrated,
the bottom of outside frame member 38 is slightly
cambered, so as to form a structural member having a generally convex configuration, the advantage of which will be explained shortly. More particularly, a reference line, designated 26, is drawn across the bottom of outside frame member 38. The camber, designated by reference lines 28, of the forward or hinged end of outside frame member 38 (relative to reference line 26) is slightly greater (e.g. by approximately an eighth of an inch) than the corresponding camber of the rearward or latched end thereof. Accordingly, the radius of curvature, R , of the rearward or latched end of frame member 38 is slightly greater than the corresponding radius of curvature of the forward or hinged end thereof. By virtue of the unique contour of upper frame member 38 relative to the domed (i.e. compound bend) configuration of vent closure panel 12, the integrity of the seal that is formed by weather seal 70 between supporting framework 14 and vent closure panel 12 is enhanced.

22

That is, framework 14 is contoured so that. in the assembled relationship, the forward edge thereof is aligned flush with closure panel 12, while the rearward edge thereof is offset (by approximately an eighth of an inch) from panel 12. Thus, sufficient pressure is applied to closure panel 12 to force the corners thereof into close contact with the corresponding corners of framework 14. This is especially significant in a roof vent wherein a single latching assembly 20 is interconnected between panel 12 and framework 14. What is more. outside frame member 38 is of a variable cross-section in order to accommodate hinge members 22 and to minimize the effects of air turbulence when the automobile is traveling with the vent closure panel 12 either raised to the opened, venilating position, or removed from supporting framework 14. That is, and referring once again to FIG. 5, the portion of outside frame member 38 that interfaces with the rearward end and opposing sides of vent closure panel 12 has a cross-section which comprises horizontally aligned upper and lowr flanges 40 and 46 and a vertically aligned supporting member 44 coextensively connected therebetween. Upper flane 40 extends radially outward from the top of vertical supporting member 44. Supporting member 44 projects through opening 36, such that upper flange 40 is located exterior to a plane containing the automobile roof line. Upper flange 40 is generally flat or slightly curved, so as to conform with the contour of the rearward end of vent closure panel 12. Therefore, when locked in the closed position of FIG. 5, the vent closure panel 12 and upper flange 40 combine to form a generally continuous surface which extends over opening 36. Upper flange 40 has a series of ridges 42 extending downwardly from the underside thereof. One or more of said ridges 42 is adapted to engage the exterior side of roof 16 for securing outside frame member 38 thereto at a position in front of the back window and between the side windows of the automobile. Molded screw bosses 48 are spaced around the periphery of outside frame member 38 from the underside of upper flange 40. An elongated slot (not shown) is created within bosses 48 so as to be adapted to receive a well-known retaining means therein, such as a screw, or the like.

Lower flange 46 is generally flat and extends radially outward from a point near the bottom of vertical supporting member 44, so that lower flange 46 is disposed interior to the plane containing the automobile roof line. The upper and lower flanges 40 and 46 of frame member 38 are aligned relatively parallel to one another but extend outwardly and in opposite directions from supporting member 44.

The portion of outside frame member 38 that interfaces with the foward end of vent closure panel 12 has a cross-section which includes an arcuately shaped flange member 52, rather than the upper flat flange 40 that was previously disclosed. Arcuate flange 52 extends outwardly from a neck 54 that is connected to the top of and formed coextensively with vertically aligned supporting member 44. Arcuate flange 52 and lower flange 46 extend outwardly and in opposite directions from vertical supporting member 44.

Supporting member 44 projects through opening 36, so that arucate flange 52 is located exterior to the plane containing the automobile roof line. The top side 56 of arcuate flange 52, which side receives the impact of the outside air thereagainst when the automobile is in motion, has an elongated, concave surface. The concave surface of side 56 rises out of the plane of the automobile roof line, so as to advantageously function as a baffle for directing the flow of air upwardly and away from vent closure panel 12. Hence, in the event that vent closure panel 12 is either raised to an opened position or disconnected and removed from its supporting framework (as is best represented in FIG. 6 of the drawings), the concave surface of arcuate flange 52 will reduce undesirable air turbulence that has otherwise been known to occur within the passenger compartment of an automobile traveling at a relatively high rate of speed. Therefore, the occupants of an automobile in which has been installed supporting framework structure 14 of the present invention are more likely to enjoy a quieter and more comfortable ride than would be likely if conventional supporting framework structures had been installed.

The underside (i.e. the side opposite concave surface 56) of arcuate flange 52 has a series of ridges 58 formed therealong. Ridges 58 project downwardly from flange 52. One or more of said ridges is adapted to engage the exterior side of roof 16 for securing outside frame member 38 thereto at a position behind the front window of the automobile.

In the assembled relationship, the inside trim ring member 60 of supporting framework structure 14 is situated entirely within the interior of the automobile, below the plane of the roof line. More particularly. trim ring member 60 is preferably stretch formed or extruded from a lightweight metal, such as aluminum. or the like. The trim ring 60 is of generally rectangular configuration of uniform cross-section that extends around the periphery of opening 36. Trim ring member 60 includes a generally flat flange 62 having an aperture formed therethrough. Flange 62 is aligned flush with the bottom of outside frame member 38, so that a screw, or the like, can be inserted upwardly through the aperture in flange 62 and into the hole formed in molded boss 48 at the underside of flange 40. Hence, the outside frame member 38 and the inside trim ring member 60 may be securely fastened to one another. whereby to form the supporting framework structure 14 of the present invention for releaseably receiving vent closure panel 12 in a manner to be better described hereinafter.

Extending upwardly from and coextensively formed with an outwardly disposed end of trim ring flange 62 is an arm 66. Arm 66 comprises a series (e.g. two) of succeeding finger-like projections, designated 66-1 and 66-2, that are connected end-to-end with one another. The upper-most projection (e.g. 66-1) engages the interior side of automobile roof 16 for securing trim ring member 60 thereto. Hence, the supporting framework structure 14 is attached to opposite sides of the vehicle roof 16 by means of the ridges 42 and 58 formed at respective flanges 40 and 52 of outside frame member 38 and the upper-most projection 66-1 of the arm 66 of inside trim ring member 60. Notches 68 are provided between each succeding projection 66-1 and 66-2 along the length of arm 66. In order to accommodate roofs of different thicknesses between outside frame member 38 and inside trim ring member 60, one or more of the projections 66-1 or 66-1 and 66-2 may be disconnected from arm 66 at the notches 68 formed therebetween.

As was previously disclosed when referring to FIG. 3,
the roof vent of the present invention is provided with
a reliable weather seal 70 to protect the interior of
the automobile from the elements. Weather seal 70 is
preferably a gasket that is fabricated from a suitable
resilient material such as, for example, duplex rubber,
or the like. Gasket 70 is assembled within the present
roof vent so as to fit snugly between vent closure
panel 12 and outside frame member 38 in order to
prevent water leakage therebetween. More particularly,
the gasket 70 comprises top and bottom portions 72 and
74, which portions are formed coextensively with one
another. The top portion 72 of gasket 70 has a
generally hollow, circular cross-section that is
adapted to become deformed (i.e. partially flattened)
upon receipt thereagainst of the vent closure panel 12,
when said panel is locked in the closed position. The
bottom portion 74 of gasket 70 has a generally hollow,
rectangular cross-section. A plurality of resilient
fingers 75 project towards one another from top and
bottom surfaces of bottom gasket portion 74. Outside
frame member 38 is positioned adjacent an outwardly
disposed side of gasket 70, so that the lower flat
flange 46 of flange member 38 is received within the hollow interior of bottom gasket portion 74 between opposing resilient fingers 75 thereof. This interconnection of gasket 70 with outside frame member 38 enances th sealing capacity of gasket 70, thereby reducing the possibility that water could be leaked into the interior of the automobile.

Positioned adjacent an inwardly disposed side of gasket 70 is a suitable bumper or stop means 76. Bumper 76 may be constructed from a relatively rigid neoprene rubber material, or the like. Bumper 76 is positioned within the assembled relationship in order to receive the rearward end of closure panel 12, when said panel is locked in the closed position. Bumper 76 is fabricated with a suitable size, so as to be capable of absorbing the impact of vent closure panel 12 thereagainst when said panel is moved from an opened to a closed position. Moreover, bumper 76 prevents closure panel 12 from over-compressing the top portion 72 of gasket 70 when panel 12 assumes a closed position. What is more, by absorbing the impact of closure panel 12, bumper 76 minimizes the wear and increases the life expectancy and sealing efficiency of gasket 70.

30

The structure of the pair of hinge members 22. by which the forward edge of vent closure panel 12 is removably connected to supporting framework structure 14, is now described in detail. while still referring to FIG. 5. More particularly. an aperture is established in the forward end of vent closure panel 12. A first end of each hing member 22 is connected to the exterior side of closure panel 12 by means of a screw 78, or the like. Screw 78 is inserted upwardly through the aperture in closure panel 12 and into engagement with hinge member 22. Well-known hardware. such as a washer 80, may be interfaced with the head of screw 78, so as to promote a secure connection between closure panel 12 and hinge member 22. A cover plate 82 may also be assembled between closure panel 12 and hinge member 22, in order to minimize the effect of mechanical stress and prevent the possible fracture of closure panel 12 near the location at which the screw 78 is inserted through panel 12 and tightened thereagainst.

FIGs. 11 and 12 of the drawings show the second end
of each hinge member 22 including a knurled drive pin
84 extending therethrough and projecting outwardly from
each side thereof. The second end of hinge member 22
is narrower than the first end thereof. As is best
illustrated when referring concurrently to FIGs. 9 and
10 of the drawings, the neck (designated 54-1) of
arcuate flange 52, which flange was previously
described as forming a portion of the outside frame
member 38, widens, so that a pair (only one of which
being shown) of cavities 86 can be formed therein. A
pair of slots 88 extend outwardly and in opposite
directions from each cavity 86. The slots 88 are
uniquely shaped so as to pivotably receive the ends of
a respective drive pin 84. More particularly, each
slot 88 comprises an entry port 90 that is interfaced
with a seat portion 92 in which a respective drive pin
84 is to be located. One wall of slot 88 is provided
with a cammed surface 94 formed between entry port 90
and seat portion 92. Cammed surface 94 provides the
impotant advantage of preventing damage to the upper
end of arcuate flange 52 in the event that hinge drive
pin 84 is improperly aligned within entry port 90 for
receipt by a corresponding seat member 92. That is, an

32

improperly aligned, incoming drive pin 84 that strikes
cammed surface 94 of slot 88 will be rotated away
therefrom and ejected towards entry port 90. In the
past, the repeated impact of an improperly aligned pin
against the walls of a receiving slot was known to
cause a fracture in the structural framework of
conventional roof vents. However, and by virtue of the
instant cammed surface 94, the adverse effects of a
drive pin 84 striking the walls of slot 88 are
minimized, while a reliable receipt of pin 84 within
seat member 92 can be better provided.

Hence, the vent closure panel of the present
invention may be raised to a ventilating position (as
is represented in FIG. 6) by rotating the closure panel
around the hinge drive pin 84 at the slots 88 which
extend from cavities 86. Moreover, the vent closure
panel can be completely removed from the roof of an
automobile (as is also represented in FIG. 6 by
reference numeral 12-1) by causing the withdrawal of
the hinge members 22 and the hinge drive pins 84 from
their respective cavities and slots 86 and 88.

33

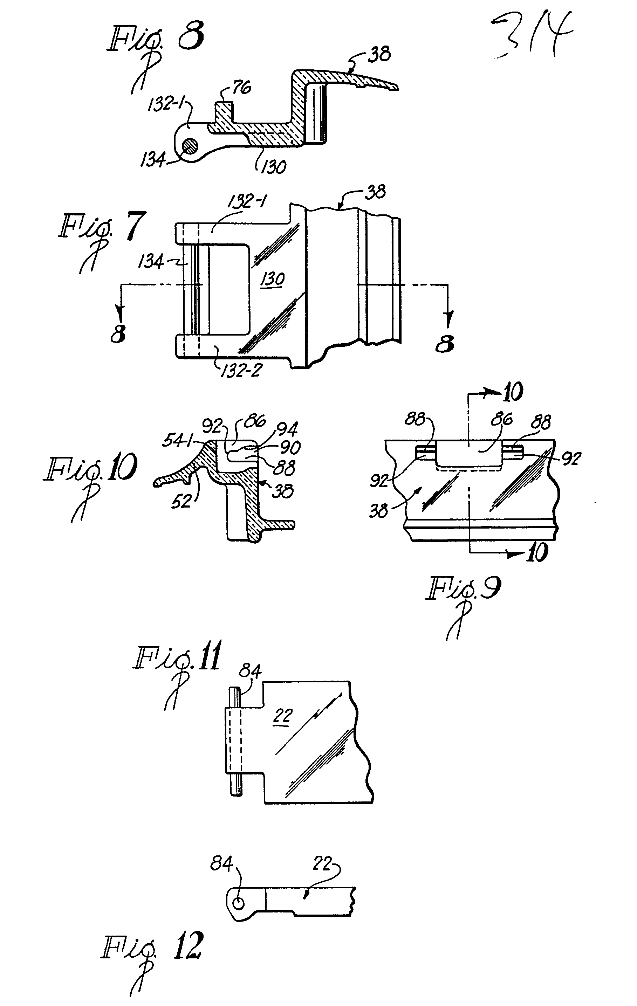

The unique roof vent security latching assembly 20 which forms an important part of the present invention is now described in detail while referring concurrently to FIGs. 13. 14 and 15 of the drawings. The rearward end of vent closure panel 12 is releaseably connected to the supporting framework structure by way of a lock handle 100 comprising a pair of identical elongated members that are aligned parallel to and spaced from one another. Lock handle 100 is fabricated from a suitable molded plastic material (such as, for example, that known in the art as Valox 420). Lock handle 100 has an embossed rib 102 (best shown in FIGs. 6 and 7) projecting from and spiralling along the outer surfaces thereof. whereby to assist an occupant of the automobile in gripping latch 20 for raising the vent closure panel 12 into the opened or ventilating position (as is best represented in FIG. 6). Lock handle 100 comprises a hollow cylindrical member 104 coextensively formed with and perpendicularly extending from the top thereof. A latch pivot 108 having a slot formed through a lower flat end thereof is positioned adjacent cylindrical member 104, so that hollow cylindrical member 104 is aligned with the slot through latch pivot 108. A knurled drive pin 110 is inserted through the respective openings in cylindrical member
104 and latch pivot 108, so that latch pivot 108 is
rotatable around the longitudinal axis of drive pin
110.

Latch pivot 108 is connected to vent closure panel 12
through an aperture formed in the rearward end thereof.
The upper end of latch pivot 108 is preferably a screw
threaded cylindrical portion that is inserted through
the aperture in closure panel 12 from the interior
surface thereof. A latch button 112 having a hollow
shank, the interior of which being adapted to engage
the threaded upper end of latch pivot 108, is inserted
through the aperture formed in closure panel 12 from
the exterior surface thereof. Well-known hardware may
be positioned between latch pivot 108 and latch button
112 in order to minimize the effects of mechanical
stress and prevent the possible fracture of closure
panel 12 near the location of the aperture through
which pivot 108 and button 112 are inserted and
connected to one another. By way of example, a
conventional lock washer 114 and hollow plastic bottom
washer 116 are positioned to receive therethrough the
threaded upper cylindrical end of latch pivot 108 at a location immediately below the interior surface of vent closure panel 12. A hollow plastic top washer 118 is positioned to receive therethrough the shank of latch button 112 at a position immediately above the exterior surface of closure panel 12.

Latching assembly 20 also includes a linking member 120 having a hollow cylindrical portion 121 formed coextensively with a first end thereof and a clasping portion 122 formed coextensively with the second end thereof. The body of linking member 120 includes a slot (not shown) extending longitudinally therethrough between the first hollow cylindrical end portion 121 and the second clasping end portion 122. One side 123 of clasping portion 122 is opened, so that said clasping portion is adapted to releaseably engage the framework of the present roof vent in a manner that will soon be disclosed. The cylindrical end portion 121 of linking member 120 is aligned with an aperture that is formed in the bottom of lock handle 100, and a knurled drive pin 124 is inserted therethrough, so as to pivotably connect linking member 120 to lock handle 100. A slide member 126 is positioned within the slot of linking member 120 between the first and second ends thereof. Slide member 126 is biased by a conventional
compression spring 128, so as to be selectively movable
through the slot of linking member 120, whereby to
cooperate with the clasping end portion 122 of linking
member 120. In a latched condition, with compression
spring 128 in a relaxed state, slide member 126 is
biased to a position that is suitable to block the
opening 123 formed in the side of clasping end portion
122, whereby to prevent a disconnection thereof from
the structural framework.

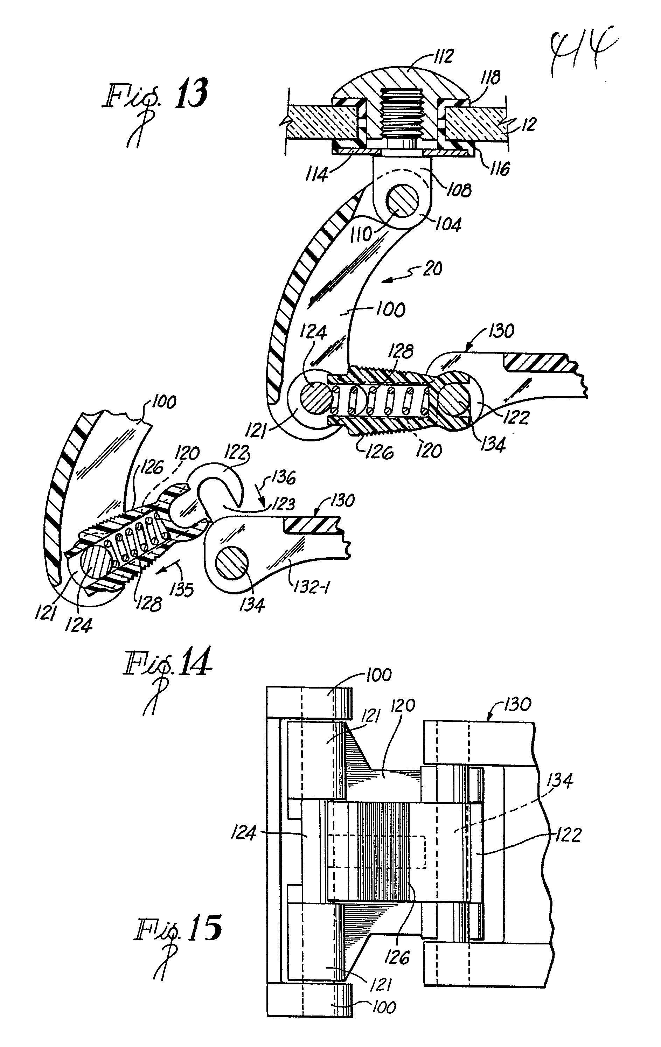

The means by which the instant security latch
assembly 20 is releaseably attached to the supporting
framework structure of the present roof vent is best
described by first referring to FIGs. 7 and 8 of the
drawings. As was previously disclosed when referring
to both FIGs. 3 and 5, a single latching assembly 20 is
connected to vent closure panel 12 at approximately the
mid-point along the rearward end thereof (i.e. that end
closest to the rear window of the automobile).
Therefore, latching assembly 20 is correspondingly
attached to the supporting framework structure at approximately the mid-point along the rearward end of outside frame member 38. Accordingly, and again referring to FIGs. 7 and 8, a segment of the lower flat flange (designated 46 in FIG. 5) of outside frame member 38 is provided with an elongation extending outwardly therefrom by which to accommodate the instant security latching assembly. More particularly,·this elongation comprises a bracket 130 having a pair of parallel legs 132-1 and 132-2 that are spaced from one another and directed generally towards the center of the opening that is established in the automobile roof by which to receive the supporting framework structure. A locking pin 134 extends between the spaced legs 132-1 and 132-2 of the bracket 130, to which pin 134 the latching assembly 20 can be removably attached.

The operation of security latching assembly 20 is best described while once again referring to FIGs. 13-15. In order to releaseably attach latching assembly 20 to the locking pin 134 between the legs (e.g. 132-1) of bracket 130. slide member 126 is selectively forced (in a direction indicated by the arrow 135) out of cooperation with or retracted from the clasping end portion 122 of linking member 120 by causing spring 128 to assume a compressed state for exposing the opened
side 123 of clasping portion 122. The linking member
120 is then positioned adjacent bracket 130 and rotated
around drive pin 124 (the direction of rotation of
linking member 120 being indicated by arrow 136) until
the locking pin 134 is captured by clasping portion 122
via the opened side 123 thereof (best illustrated in
FIG. 14). By releasing slide member 126, so that
spring 128 returns to its relaxed state. said slide
member 126 is biased backed into cooperation with the
clasping portion 122. whereby to block the opened end
123 thereof and thereby prevent the disengagement of
linking member 120 from locking pin 134.

It is to be understood that the latching assembly 20
may also be disconnected from support bracket 130 by
again retracting slide member 126, so that the clasping
end portion 122 of linking member 120 can be rotated
out of engagement with locking pin 134. With latching
assembly 20 in the unlatched condition and disconnected
from bracket 130, any occupant of the automobile may
easily raise the vent closure panel 12 to a position
(shown in phantom and designated 12-1 of FIG. 6) which
permits said closure panel to be removed from its supporting framework structure. In this way, the passenger compartment of the vehicle is exposed to the outside environment (e.g. sunshine).

In the latched condition (best illustrated in FIG. 13) with assembly 20 engaging locking pin 134. the lock handle 100 and the linking member 120 are aligned to approximately make a right angle relative to one another. This alignment forms an important security aspect of the present invention. That is, by selecting lock handle 100 to be of suitable length, the present latching assembly 20 cannot be easily operated from a position outside the automobile when said assembly is being utilized to retain vent closure panel 12 in a ventilating position. More particularly. by aligning lock handle 100 and linking member 120 to approximately make a right angle during the process of disconnecting latching assembly 20 from bracket 130, there is little access space available through which a person can reach to operate assembly 20 and thereby remove closure panel 12 to possibly intrude upon the security of the automobile and its contents. Hence, the operator of the vehicle may raise the vent closure panel to the ventilating position (as is represented in FIG. 6) while minimizing the risk that an unauthorized person may at some time gain access to the interior of the automobile while stationed outside the passenger compartment thereof. Moreover, it is also pointed out that the inclusion of an undesirable pull pin, which pin is common to many prior art roof vent latching assemblies, has been obviated by virtue of the instant latching assembly 20. Thus, a small child of tender years who is stationed within the passenger compartment of the automobile will not be easily able to operate latching assembly 20, whereby to disconnect the vent closure panel from its framework without first gaining permission or assistance.

Therefore, a unique motor vehicle roof vent 10 has been disclosed comprising generally a closure panel 12, a security latching assembly 20, and a supporting framework structure 14 having a varying cross section to facilitate receipt of panel 12 therein and to reduce the effects of air turbulence within the passenger compartment of said vehicle. By virtue of the instant latching assembly, the closure panel 12 may be removably connected at particularly shaped slots (FIGs. 9 and 10) formed in the framework structure 14.

41

so as to minimize potential damage to the framework structure that might be caused by misaligning associated hinge members 22 with said slots. An occupant of the vehicle can rotate the locking handle 100 of latching assembly 20 in a generally downward direction around drive pins 110 and 124, so that the lower end of handle 100 is received in the space formed between the parallel arms of bracket 130. In this case, the vent closure panel 12 will be locked in the closed position (FIG. 5). Moreover, a vehicle occupant can rotate locking handle 100 in a generally upward direction around drive pins 110 and 124, whereby handle 100 and linking member 120 are positioned in substantially vertical alignment with one another. In this case, the vent closure panel 12 will be raised to and supported in the ventilating position (FIG. 6). What is more, with locking handle 100 and linking member 120 aligned to make an approximate right angle relative to one another (whereby to prevent an unauthorized entry into the vehicle), sufficient force may be exerted to retract spring-biased slide member 126, so that the clasping end portion 122 of linking member 120 can be disengaged from the locking pin 134 of bracket 130 in order to detach latching assembly 20 from bracket 30. Hence. the vent closure panel 12 can be conveniently removed from the roof of the motor vehicle (FIGs. 13 and 14).

CLAIMS

1. A vent (10) for utilization at the roof of a motor vehicle, said vehicle having an opening (36) established in the roof (16) thereof at a location generally over the passenger compartment for receiving said vent, said vent including framework carried by said roof about the periphery of the opening established therein, a vent closure panel (12) having dimensions that substantially conform to those of said opening so that said closure panel can be received within said framework means, hinge means (22) connected to said closure panel for removably connecting the forward end of said panel to said framework, and a latching assembly (20) to releasebly attach the rearward end of said closure panel to said framework, said roof vent (10) being characterized in that:

the forward end of said framework (14) has a cross section including an arcuate shaped upper flange member (52) extending outwardly from a supporting member (44) and through the opening (36) in said roof (16) so as to communicate with the top of said roof, and

44

Claim 1. Cont.

the rearward end of said framework (14) has a cross section including a substantially flat upper flange member (40) extending outwardly from said supporting member (44) and through the opening (36) in said roof (16) so as to communicate with the top of said roof.

2. The roof vent recited in claim 1, wherein each of the respective cross sections of the forward and rearward ends of said framework (14) also includes a substantially flat lower flange member (46) extending outwardly from said spporting member (44) below the roof line of said vehicle,

said upper and lower flange members (46, 52 and 40, 46) extending outwardly from said spporting member (44) in opposite directions relative to one another.

3.   The roof vent recited in claim 2, further characterized by sealing means (70) extending in a direction around the periphery of the opening (36) in said roof (16) between said vent closure panel (12) and said framework (14),

the lower flange member (46) of said framework extending into a portion (74) of said sealing means to increase the sealing efficiency therebetween.

4.   The roof vent recited in claim 1, wherein said arcuate shaped upper flange member (52) at the forward end of said framework (14) has a concave surface (56) extending between the top of said vehicle roof (16) and the supporting means (44) of said upper flange member,

said concave surface forming a baffle, whereby to direct air away from said closure panel (12) when said vehicle is traveling at a relatively high rate of speed.

5. The roof vent recited in claim 1, further characterized by sealing means (70) extending in a direction around the periphery of the opening (36) in said roof (16) between said vent closure panel (12) and said framework (14),

said sealing means having a resilient top section to receive said closure panel thereagainst when said closure panel is in a closed position within the opening established in said vehicle roof, and

said sealing means also having a hollow bottom section (74) within which to receive a portion (46) of said framework for enhancing the seal formed between said framework and said closure panel.

6. The roof vent recited in claim 1, wherein said framework (14) has a contour which is cambered, the forward end of said framework means having a camber (FIG. 4) which is greater than the camber of the rearward end of said framework means.

7. The roof vent recited in claim 1, wherein each of said framework (14) and said vent closure panel (12) has a respective contour which is cambered, the camber of the forward ends of said framework and said closure panel being substantially equal to one another, and the camber of the rearward end of said framework having a camber which is greater than the camber of the rearward end of said closure panel.

8. A vent (10) for utilization at the roof (16) of a motor vehicle, said vehicle having an opening (36) established in the roof thereof at a location generally over the passenger compartment for receiving said vent, said vent including framework (14) carried by said roof about the periphery of the opening established therein, a vent closure panel (12) having dimensions that substantially conform to those of said opening so that said closure panel can be received within said framework means, hinge means (22) connected to said closure panel for removably connecting the forward end of said panel to said framework, and a latching assembly (20) to releaseably attach the rearward end of said closure panel to said framework, said roof vent being characterized in that:

Claim 8. Cont.

the rearward end of said framework (14) has at least one bracket portion (130) extending therefrom, said bracket portion having a locking pin (134) connected therethrough, and

said latching assembly (20) releaseably connecting the rearward end of said closure panel to the locking pin of said bracket portion.

9. The roof vent recited in claim 8, wherein said at least one bracket portion (130) extends from approximately the mid-point of the rearward end of said framework (14) for receiving said latching assembly (20) at the locking pin (134) thereof.

10. The roof vent recited in claim 8, wherein said hinge means (22) includes a pin (84) extending therethrough,

the forward end of said framework (14) having a cavity (86) formed therein and at least one slot (88) extending outwardly from said cavity by which to respectively receive said hinge means and said hinge pin,

said slot having a cammed surface (94) by which to block the entry of an incoming pin which is misaligned with respect to said slot in order to prevent damage to said framework.

11. The roof vent recited in claim 8, wherein said latching assembly (20) comprises a linking member (120) pviotably connected between the rearward ends of said framework (14) and said closure panel (12),

a first end of said linking member having a hook (122) for releaseably engaging the locking pin (134) of said bracket portion (130).

12. The roof vent recited in claim 11, wherein said latching assembly (20) further comprising a handle (100) by which to grip said latching assembly, said handle pivotably connected between the rearward end of said closure panel (12) and the second end of said linking member (120).

13. The roof vent recited in claim 11, wherein said latching assembly (20) further comprises a slide portion (126) which is interconnected with said linking member (120),

said slide portion being movable relative to said linking member in order to cooperate with the first end of said linking member, so as to block the disengagement of said hook (122) from the locking pin (134) of said bracket portion (130).

14. The roof vent recited in claim 13, wherein said latching means further comprises a spring (128) for biasing said slide portion (126) into a position to block the disengagement of said hook (122) from said locking pin (134),

said slide portion being selectively retractable against the bias of said spring (128), so that said slide portion is movable to unblock the disengagement of said hook from said locking pin in order to permit said latching assembly (20) to be detached from said bracket portion (130).

15. A vent (10) for utilization at the roof of a motor vehicle, said vehicle having an opening (36) established in the roof (16) thereof at a location generally over the passenger compartment for receiving said vent, said vent characterized by:

framework (14) carried by said roof about the periphery of the opening established therein, said framework having a contour which is cambered, the forward end of said framework having a greater camber than the camber of the rearward end thereof,

Claim 15. Cont.

a vent closure panel (12) having dimensions that substantially conform to those of said opening so that said closure panel can be received within said framework,

hinge means (22) connected to said closure panel for removably connecting the forward end of said panel to said framework, and

a latching assembly (20) to releaseably attach the rearward end of said closure panel to said framework,

the rearward end of said framework having a bracket portion (130) extending from approximately the mid-point thereof, said bracket portion having a locking pin (134) extending therethrough,

said latching assembly releaseably connecting the rearward end of said closure panel to the locking pin of said bracket means. ,

0059859

Fig.1

Fig.2

Fig.3

Fig.4

214

Fig. 5

Fig. 6

0059859

314

Fig. 8

Fig. 7

Fig. 10

Fig. 9

Fig. 11

Fig. 12

0059859

*Fig. 13*

*Fig. 14*

*Fig. 15*